# EUROPÄISCHE PATENTANMELDUNG

(11) **EP 2 692 815 A1**
(43) Veröffentlichungstag der Anmeldung: **05.02.2014**
(21) Anmeldenummer: 12178932.5
(22) Anmeldetag: 02.08.2012
(51) Int. Cl.: C09K 3/14, B24D 3/14, C04B 35/111

(54) **Schleifkorn mit konkavem Abschnitt**

(71) Anmelder: ROBERT BOSCH GMBH, 70442 Stuttgart (DE)
(72) Erfinder: Heijtmann, Georg, 74395 Mundelsheim (DE); Lindemann, Gert, 72805 Lichtenstein (DE); Pleschinger, Tony, 70439 Stuttgart (DE); Stedile, Petra, 73732 Esslingen (DE); Fuenfschilling, Stefan, 78337 Öhningen (DE); Jenni, Adrian, 9000 St. Gallen (CH); Frei, Donat, 8500 Frauenfeld (CH)

(57) **Zusammenfassung**

Die Erfindung betrifft einerseits ein Schleifkorn (10; 10'; 10"; 10"'; 10""; 10""') in Form eines insbesondere geraden Zylinders mit zwei gegenüberliegenden Basisflächen (11), wobei die Basisflächen (11) eine Aussenkontur (12) aufweisen, die mindestens einen konkaven Abschnitt (13) enthält. Das Schleifkorn (10; 10'; 10"; 10"'; 10""; 10""') kann ein keramisches Material enthalten, insbesondere polykristallines α-Al₂O₃. Zudem sind Gesamtheiten von Schleifkörnern (10; 10'; 10"; 10"'; 10""; 10""'), Verfahren zum Herstellen von Schleifkörnern (10; 10'; 10"; 10"'; 10""; 10""'), Giessformen (30), Schleifartikel (40), Verfahren zum Herstellen von Schleifartikeln (40) und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giessformen, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkornes können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise orientieren sich viele der in US 5,201,916 beschriebenen dreieckförmigen Schleifkörner mit einer Seitenfläche auf der Unterlage, so dass eine Spitze von der Unterlage weg weist. Auf diese Weise bildet sich beim Bearbeiten einer Oberfläche ein Eingriffswinkel von + 30°. Unter einem Eingriffswinkel wird hierbei der Winkel zwischen einer Schneidfläche des Schleifkorns und einer Senkrechten zur bearbeiteten Oberfläche verstanden. Der Eingriffswinkel ist positiv, wenn die genannte Senkrechte im Inneren des

Schleifkorns verläuft; er ist dagegen negativ, wenn die Senkrechte ausserhalb des Schleifkorns verläuft (siehe dazu auch die untenstehende

Figurenbeschreibung). Aufgrund des vergleichsweise grossen Eingriffswinkels ist die Schneidwirkung (d. h. die Spanbildung und der Materialabtrag) dieser Schleifkörner vergleichsweise gering. Zudem vergrössert sich beim Abtragen der Schleifkörner während des Schleifprozesses die Kontaktfläche zwischen Schleifkorn und bearbeiteter Oberfläche, so dass auch die Reibung und die Wärmeerzeugung ansteigen.

Es ist daher eine Aufgabe der vorliegenden Erfindung, die Nachteile des Standes der Technik zumindest teilweise zu beheben. Insbesondere soll also ein Schleifkorn bereitgestellt werden, welches eine höhere Schneidwirkung hervorruft. Mit besonderem Vorteil sollte die Form des Schleifkorns derart sein, dass es sich beim Aufstreuen auf eine Unterlage mit möglichst hoher Wahrscheinlichkeit derart orientiert, dass eine höhere Schneidwirkung herbeigeführt werden kann.

Diese Aufgabe wird gelöst durch ein Schleifkorn in Form eines Zylinders mit zwei gegenüberliegenden Basisflächen, wobei die Basisflächen erfindungsgemäss eine Aussenkontur aufweisen, die mindestens einen konkaven Abschnitt enthält.

Unter einem Zylinder wird hier und im Folgenden ein Körper verstanden, der von zwei Basisflächen sowie von einer Mantelfläche begrenzt wird. Die Basisflächen sind dabei bevorzugt im Wesentlichen eben und ebenfalls bevorzugt im Wesentlichen zueinander parallel. Die Mantelfläche wird durch eine Schar von im Wesentlichen zueinander parallelen Strecken gebildet, die im Folgenden mit dem Begriff "Mantelstrecke" bezeichnet werden. Die Aussenkontur der Basisfläche kann mindestens einen geradlinigen und/oder mindestens einen kurvenförmigen Abschnitt umfassen; die Form der Basisflächen ist also insbesondere nicht auf Polygone oder Kreise beschränkt. Es ist überdies auch denkbar und liegt im Rahmen der Erfindung, dass die Basisfläche mindestens eine Öffnung aufweist. In diesem Fall hat die Basisfläche auch eine Innenkontur, die einen oder mehrere zusammenhängende Abschnitte aufweisen kann. Die zugehörigen Mantelstrecken umschliessen dann einen oder mehrere Kanäle, die das Schleifkorn vollständig durchdringen. Ist die Basisfläche ein Polygon, so hat das Schleifkorn die Form eines Prismas. In einigen Varianten ist es auch denkbar, dass das Schleifkorn mindestens ein Sackloch enthält, welches das Schleifkorn nur teilweise durchdringt. Ein solches Sackloch kann in eine der Basisflächen oder die Mantelfläche münden.

Bevorzugt handelt es sich bei dem Zylinder um einen geraden Zylinder; dies bedeutet, dass die Mantelstrecken im Wesentlichen senkrecht zu den Basisflächen verlaufen. Die Erfindung erfasst jedoch auch ebenso schiefe Zylinder, bei denen die Mantelstrecken nicht senkrecht zu den Basisflächen verlaufen.

Ein Abschnitt der Aussenkontur wird im Rahmen der vorliegenden Erfindung als konkav verstanden, wenn die geradlinige Verbindung der Endpunkte dieses Abschnitts vollständig ausserhalb der Basisfläche verläuft. Als konkaver Abschnitt wird insbesondere ein Abschnitt mit strikt konkaver Krümmung angesehen. Ausserdem wird im Rahmen der Erfindung auch ein Abschnitt als konkav bezeichnet, der sich aus zwei benachbarten geradlinigen Teilabschnitten zusammensetzt, die an einer überstumpfen Ecke zusammenlaufen. Ein überstumpfer Winkel ist dabei definitionsgemäss grösser als 180°.

Das Vorhandensein eines konkaven Abschnitts führt dazu, dass der Eingriffswinkel gegenüber dem Eingriffswinkel eines herkömmlichen Schleifkorns ohne konkaven Abschnitt verringert wird, wenn das Schleifkorn zur Bearbeitung einer Oberfläche eingesetzt wird. Hierdurch kann die Schneidwirkung des Schleifkorns erhöht werden. Dies gilt vor allem dann, wenn die Mantelstrecken parallel zur Unterlage verlaufen - im Falle eines geraden Zylinders also dann, wenn die Basisflächen im Wesentlichen senkrecht zur Unterlage ausgerichtet sind. Eine derartige Ausrichtung kann insbesondere mit Hilfe einer an sich bekannten elektrostatischen Streuung der Schleifkörner erfolgen.

Die Aussenkontur kann auch mehrere konkave Abschnitte aufweisen, insbesondere mindestens zwei oder sogar mindestens drei konkave Abschnitte. Diese konkaven Abschnitte können gleichartig oder auch verschiedenartig ausgebildet sein. Insbesondere können sie gleiche oder verschiedene Krümmungen aufweisen.

Die Aussenkontur der Basisfläche kann mindestens eine Ecke aufweisen. Eine Ecke kann als ein Punkt der Aussenkontur angesehen werden, an dem die Richtungen der Tangenten an der Aussenkontur unstetig verlaufen. Die Mantelstrecke, welche an einer Ecke endet, bildet eine Kante des Schleifkorns, die zu einer erhöhten Schneidwirkung des Schleifkorns führt, wenn diese in Kontakt mit einer bearbeiteten Oberfläche gerät.

Die Aussenkontur definiert an einer Ecke einen Innenwinkel der Basisfläche. Dieser Innenwinkel liegt bevorzugt im Bereich von 65° bis 120°, bevorzugt von 65° bis 115°, weiter bevorzugt von 75° bis 105°, besonders bevorzugt von 85° bis 95° und ist ganz besonders bevorzugt 90°. Derartige Innenwinkel führen zu einer besonders hohen Schneidwirkung.

In vielen Ausführungsformen enthält die Aussenkontur zumindest einen geradlinigen Abschnitt. Die Teilschar der Mantelstrecken, die durch diesen geradlinigen Abschnitt der Aussenkontur verläuft, bildet eine ebene Fläche. In einigen möglichen Ausführungen kann ein Schleifkorn dann stabil auf einer Unterlage fixiert werden, wenn diese ebene Fläche auf der Unterlage aufliegt. In anderen Ausführungsbeispielen kann die ebene Fläche im Wesentlichen parallel zu einer bearbeiteten Oberfläche verlaufen und mit dieser in Kontakt sein. Ein solcher flächiger Kontakt des Schleifkorns mit der bearbeiteten Oberfläche kann ein Verkippen des Schleifkorns verhindern.

Es ist denkbar und liegt im Rahmen der Erfindung, dass ein konkaver Abschnitt und ein geradliniger Abschnitt einen gemeinsamen Endpunkt aufweisen, ohne dass hier eine Ecke vorliegt; die Richtungen der Tangenten verlaufen hier also stetig. Es ist jedoch in vielen Ausführungsbeispielen bevorzugt, wenn mindestens ein Endpunkt eines geradlinigen Abschnitts eine Ecke der Aussenkontur bildet. Falls beispielweise der geradlinige Abschnitt parallel zu einer bearbeiteten Oberfläche ausgerichtet ist und diese bei der Bearbeitung berührt, so bildet die durch den benachbarten Abschnitt verlaufende Teilschar der Mantelstrecken eine Schneidfläche, die unter einem Winkel zur Unterlage verläuft. Eine derart angeordnete Schneidfläche führt zu einer erhöhten Schneidwirkung, während der oben bereits erwähnte flächige Kontakt des Schleifkorns mit der bearbeiteten Oberfläche ein Verkippen des Schleifkorns verhindert.

Der gerade beschriebene Effekt kann noch verstärkt werden, wenn das Schleifkorn so ausgebildet ist, dass es beim Streuen mit grosser Wahrscheinlichkeit derart auf der Unterlage orientiert wird, dass zumindest ein geradliniger Abschnitt der Aussenkontur parallel zur Unterlage und somit auch zur bearbeiteten Oberfläche verläuft. Dies kann dadurch erreicht werden, dass zumindest ein geradliniger Abschnitt unter einem Winkel zu einer Stützebene des Schleifkorns verläuft, der höchstens 20°, bevorzugt höchstens 10°, besonders bevorzugt höchstens 5° beträgt. Besonders bevorzugt sollte dieser Winkel 0° sein, so dass der geradlinige Abschnitt und die Stützebene parallel zueinander verlaufen. Dabei ist eine Stützebene eine imaginäre Ebene des Schleifkorns mit der folgenden Eigenschaft: Wenn das Schleifkorn derart auf eine horizontale Auflageebene gelegt wird, dass die Stützebene mit der Auflageebene übereinstimmt, ist das Schleifkorn stabil gegenüber einem Umkippen. Dies ist dann der Fall, wenn die senkrechte Projektion des Schwerpunkts des Schleifkorns auf die Auflagepunkte innerhalb der konvexen Hülle der Punkte liegt, an denen das Schleifkorn auf der Auflageebene aufliegt. Liegt also das Schleifkorn mit der Stützebene auf einer ebenen Schleifmittel-Unterlage auf, so ist der oben genannte Winkel zwischen Stützebene und geradlinigem Abschnitt gleich dem Winkel, den der geradlinige Abschnitt mit der Unterlage einschliesst. Dieser ist folglich auch gleich dem Winkel zwischen dem geradlinigen Abschnitt und einer bearbeiteten Oberfläche.

Mit besonderem Vorteil verläuft eine Tangente an zumindest einem Punkt der Aussenkontur unter einem Winkel zu einer Senkrechten, die senkrecht zur oben beschriebenen Stützebene des Schleifkorns verläuft. Dieser Winkel kann im Bereich von -30° bis +30°, bevorzugt von -25° bis +25°, weiter bevorzugt von - 15° bis +15°, besonders bevorzugt von -5° bis +5° liegen und ganz besonders bevorzugt 0° sein. Wie oben wird auch dieser Winkel als positiv angesehen, wenn die Senkrechte im Inneren des Schleifkorns verläuft; sie wird als negativ angesehen, wenn sie ausserhalb des Schleifkorns verläuft. Liegt das Schleifkorn mit seiner Stützebene auf einer Schleifmittel-Unterlage auf, so stimmt der genannte Winkel betragsmässig mit dem Eingriffswinkel einer Schneidfläche im Bereich dieses Punktes überein. Je kleiner der Eingriffswinkel betragsmässig ist, desto weniger ändert sich bei der Abnutzung des Schleifkorns die Grösse der mit der bearbeiteten Oberfläche in Kontakt geratenden Oberfläche des Schleifkorns und desto konstanter ist die Schleifwirkung während der Abnutzung.

Mindestens ein Endpunkt des konkaven Abschnitts kann eine Ecke der Aussenkontur bilden. Insbesondere kann diese Ecke auch gleichzeitig einen Endpunkt eines geradlinigen Abschnitts der Aussenkontur bilden.

In bevorzugten Ausführungsbeispielen weist die Aussenkontur mindestens drei und besonders bevorzugt genau drei konkave Abschnitte auf, deren Enden jeweils Ecken der Aussenkontur sind. Zudem weist die Aussenkontur bevorzugt zwischen zwei konkaven Abschnitten jeweils einen geradlinigen Abschnitt auf. Die konkaven Abschnitte können beispielsweise konkav gekrümmt werden. Die geradlinigen Abschnitte können gleiche Längen haben. Auch die drei konkaven Abschnitte können untereinander die gleichen Längen haben. Insbesondere kann die Basisfläche also eine dreizählige Symmetrie aufweisen. Eine dreizählige Symmetrie führt dazu, dass die Form und damit die Wirkung des Schleifkorns unabhängig davon ist, in welcher Orientierung das Schleifkorn auf der Unterlage liegt. Auch vierzählige, fünfzählige, sechszählige Symmetrien etc. führen zu der genannten Unabhängigkeit.

Die Form und die Grösse des Schleifkornes können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn einen Durchmesser im Bereich von 100 µm bis 2000 µm haben. Der Durchmesser des Schleifkorns wird hierbei verstanden als der Durchmesser eines Hüllkreises der Basisfläche. Dies ist der kleinste Durchmesser eines Kreises, der das Schleifkorn umschliesst. Zur Bestimmung des Durchmessers kann mit Hilfe eines Mikroskops ein Bild einer Basisfläche des Schleifkorns erzeugt werden. Der Durchmesser (d. h. der Durchmesser des Hüllkreises) kann dann aus diesem Bild bestimmt werden.

Das Verhältnis aus der Höhe des Schleifkorns und dem Durchmesser ist bevorzugt höchstens 1, weiter bevorzugt höchstens 0,8 und besonders bevorzugt höchstens 0,6. Unter der Höhe des Schleifkorns wird dabei der senkrechte Abstand der beiden Basisflächen voneinander verstanden. Je kleiner dieses Verhältnis ist, desto schmaler sind bei vorgegebenem Durchmesser die Mantelflächen des Schleifkorns und desto geringer sind die Reibung und die Wärmeentwicklung, wenn das Schleifkorn mit einer gegenüberliegenden Mantelfläche auf einer Unterlage angeordnet ist.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise werden auch Abschnitte der Aussenkontur als im Wesentlichen geradlinig angesehen, wenn sie zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache des Durchmessers des Schleifkorns beträgt. Entsprechendes gilt für die Mantelstrecken, die ebenfalls eine geringfügige Krümmung aufweisen können. Ein Punkt der Aussenkontur wird im Wesentlichen als Ecke angesehen, wenn der Krümmungsradius dort höchstens 10 %, bevorzugt höchstens 5 %, besonders bevorzugt höchstens 2 % des Durchmessers des Schleifkorns beträgt. Des Weiteren werden die beiden Basisflächen auch als im Wesentlichen eben verstanden, wenn sie konkav oder konvex gewölbt sind und Krümmungsradien aufweisen, die mindestens das Doppelte, bevorzugt mindestens das Fünffache, besonders bevorzugt mindestens das Zehnfache des Durchmessers des Schleifkorns betragen. Die Basisflächen können auch jeweils mehrere im Wesentlichen zueinander parallele Flächenabschnitte enthalten, die einander an einer oder mehreren Kanten und/oder Ecken berühren. "Im Wesentlichen parallel" bedeutet dabei, dass der Winkel zwischen den Flächenabschnitten kleiner als 20°, bevorzugt kleiner als 10° und besonders bevorzugt kleiner als 5° ist. Krümmungen, Kanten oder Ecken in den Basisflächen können beispielsweise herstellungsbedingt aus der oberen freien, nicht in Kontakt mit einer Giessform stehenden Fläche der Dispersion entstehen. Ferner werden die Basisflächen auch als im Wesentlichen parallel zueinander angesehen, wenn sie unter einem Winkel zueinander angeordnet sind, der höchstens 10°, bevorzugt höchstens 5°, besonders bevorzugt höchstens 2° ist.

Die oben genannten Toleranzen gelten unabhängig voneinander. So ist es beispielsweise denkbar, dass die Basisflächen eben sind und die Mantelstrecken eine geringfügige Krümmung aufweisen. Umgekehrt ist es auch denkbar, dass die Basisflächen eine geringfügige Wölbung aufweisen, während die Mantelstrecken gerade sind. Bevorzugt weist das Schleifkorn aber in Bezug auf jede erfindungsgemässe geometrische Eigenschaft eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al2O3.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns.

Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al2O3 bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al2O3, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Die Giessform kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Zu diesem Zweck kann die Oberfläche der Vertiefung eine Bodenfläche aufweisen, die gleich der Form der Basisfläche der herzustellenden Schleifkörner ist und parallel zur Oberseite der Giessform verläuft. Von der Bodenfläche erstreckt sich eine Seitenwand, die durch eine Schar paralleler Strecken gebildet ist und komplementär zur Mantelfläche der herzustellenden Schleifkörner ist. Insbesondere hat die Seitenwand also mindestens einen konvexen Abschnitt.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Eine elektrostatische Streuung ist insbesondere dann bevorzugt, wenn das Verhältnis aus Höhe und Durchmesser des Schleifkorns eher klein ist.

Bei einer mechanischen Streuung würden derartige Schleifkörner nämlich eher so ausgerichtet, dass ihre Basisflächen parallel auf der Oberfläche aufliegen. Die oben beschriebenen Vorteile der erfindungsgemässen Form der Schleifkörner wären damit zumindest teilweise reduziert. Je grösser hingegen das genannte Verhältnis ist, desto weniger Schleifkörner werden derart ausgerichtet, dass ihre Basisflächen parallel auf der Oberfläche aufliegen, und desto zuverlässiger ist eine mechanische Streuung.

Ferner richtet sich die Erfindung auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figur 1: eine seitliche Ansicht eines bekannten Schleifkorns bei der Bearbeitung einer Oberfläche;
Figuren 2a und b: zwei Ansichten einer ersten Ausführungsform eines erfindungsgemässen Schleifkorns;
Figur 3: eine seitliche Ansicht einer zweiten Ausführungsform eines erfindungsgemässen Schleifkorns;
Figur 4: eine seitliche Ansicht einer dritte Ausführungsform eines erfindungsgemässen Schleifkorns;
Figur 5: eine seitliche Ansicht einer vierten Ausführungsform eines erfindungsgemässen Schleifkorns;
Figuren 6a und b: zwei Ansichten einer fünften Ausführungsform eines erfindungsgemässen Schleifkorns;
Figuren 7a und b: zwei Ansichten einer sechsten Ausführungsform eines erfindungsgemässen Schleifkorns;
Figur 8: eine Giessform zur Herstellung eines Schleifkorns der vierten erfindungsgemässen Ausführungsform.

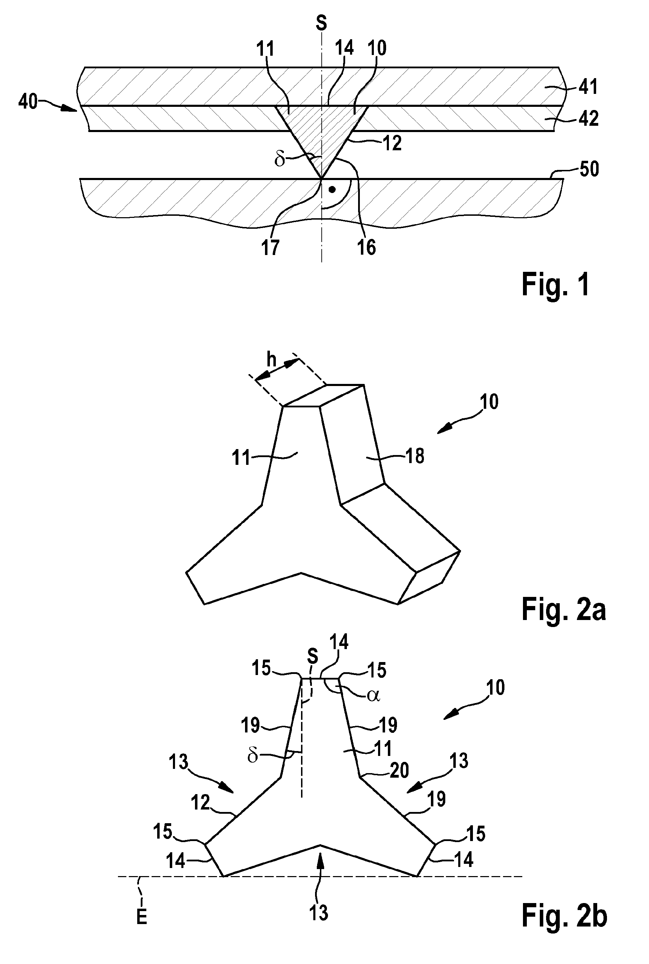

Die Figur 1 zeigt schematisch die Bearbeitung einer Oberfläche 50 mit einem Schleifartikel 40 mit einem bekannten Schleifkorn 10. Zur Vereinfachung der Darstellung ist hier nur ein einziges Schleifkorn 10 gezeigt, obwohl der Schleifartikel 40 natürlich tatsächlich eine Vielzahl solcher Schleifkörner 10 enthält. Das Schleifkorn 10 ist mit Hilfe eines Bindemittels 42 an einer Unterlage 41 fixiert. Es hat die Form eines geraden Zylinders mit einer Basisfläche 11 in Form eines gleichseitigen Dreiecks. Ein ebener Abschnitt des Schleifkorns 10, der einen geradlinigen Abschnitt 14 der Aussenkontur 12 berührt, liegt auf der Unterlage 41 auf, so dass eine Spitze 17 des Schleifkorns 10 auf die Oberfläche 50 gerichtet ist. Zwischen einer Schneidfläche 16 und einer Senkrechten S zur Oberfläche 50 ist ein Eingriffswinkel δ von + 30° gebildet. Diesem wird hier ein positives Vorzeichen zugewiesen, da die Senkrechte S im Innern des Schleifkorns 10 verläuft. Ein derartiger Eingriffswinkel führt nur zu einer vergleichsweise geringen Schneidwirkung.

Die Figuren 2a und 2b zeigen ein erstes erfindungsgemässes Schleifkorn 10. Gemäss der perspektivischen Ansicht in Figur 2a hat das Schleifkorn 10 die Form eines Zylinders mit zwei gegenüberliegenden Basisflächen 11, von denen hier nur eine erkennbar ist. Zwischen den beiden Basisflächen 11 erstreckt sich eine Mantelfläche 18. Der Zylinder hat eine Höhe h.

Figur 2b zeigt eine Draufsicht auf eine der Basisflächen 11. Das Schleifkorn 10 hat einen Durchmesser, der dem Durchmesser eines hier nicht dargestellte Hüllkreises der Basisfläche 11 entspricht. Die Aussenkontur 12 weist drei konkave Abschnitt 13 auf. Die konkaven Abschnitte 13 sind von jeweils zwei geradlinigen Teilabschnitten 19 gebildet, die an einer überstumpfen Ecke 20 zusammenlaufen. Alle Teilabschnitt 19 haben die gleiche Länge, und alle überstumpfen Ecken 20 haben den gleichen Winkel. Die konkaven Abschnitt 13 enden an Ecken 15. Da die Verbindungsstrecken zweier benachbarter Ecken 15 ausserhalb der Basisfläche 11 verlaufen, werden die dazwischen verlaufenden Abschnitt 13 im Rahmen der Erfindung als konkav bezeichnet. Zwischen zwei benachbarten Ecken 15 erstrecken sich ausserdem geradlinige Abschnitte 14, die untereinander ebenfalls die gleiche Länge haben. Der Innenwinkel α an jeder Ecken 15 kann beispielsweise 105° betragen (dieser stimmt nicht mit dem in der nur schematischen Zeichnung gezeigten Winkel überein).

In Figur 2b ist auch eine imaginäre Stützebene E des Schleifkorns 10 dargestellt. Der in Figur 2b oben dargestellte geradlinige Abschnitt 14 verläuft parallel zu dieser Stützebene E, also unter einem Winkel von 0° zur Stützebene E. Wenn das Schleifkorn 10 derart auf einer Schleifmittel-Unterlage 41 aufliegt, dass die Stützebene E mit der Unterlage 41 übereinstimmt, so ist das Schleifkorn 10 stabil gegenüber einem Umkippen. In dieser Orientierung verläuft der oben dargestellte geradlinige Abschnitt 14 parallel zu einer bearbeiteten Oberfläche 50, und die Teilabschnitte 19 der konkaven Abschnitte 13 bilden Schneidflächen.

Für das in den Figuren 2a und 2b dargestellte Schleifkorn 10 ergibt sich ein Eingriffswinkel δ = α - 90° = 15°. Dieser Eingriffswinkel δ stimmt im hier dargestellten Ausführungsbeispiel mit dem Winkel überein, der zwischen dem Teilabschnitt 19 und einer Senkrechten S gebildet ist, die senkrecht zur Stützebene E verläuft. Der Eingriffswinkel δ dieses erfindungsgemässen Schleifkorns 10 ist geringer als der Eingriffswinkel von 30° des in Figur 1 dargestellten herkömmlichen Schleifkorns 10. Hierdurch ergibt sich eine erhöhte Schleifwirkung.

Die Basisfläche 11 des in den Figuren 2a und 2b gezeigten Schleifkorns 10 weist eine dreizählige Symmetrie auf. Die Basisfläche ist also invariant unter einer Rotation um 120° in der Ebene der Basisfläche 11. Die oben beschriebene Erhöhung der Schneidwirkung ist daher unabhängig von dieser Orientierung.

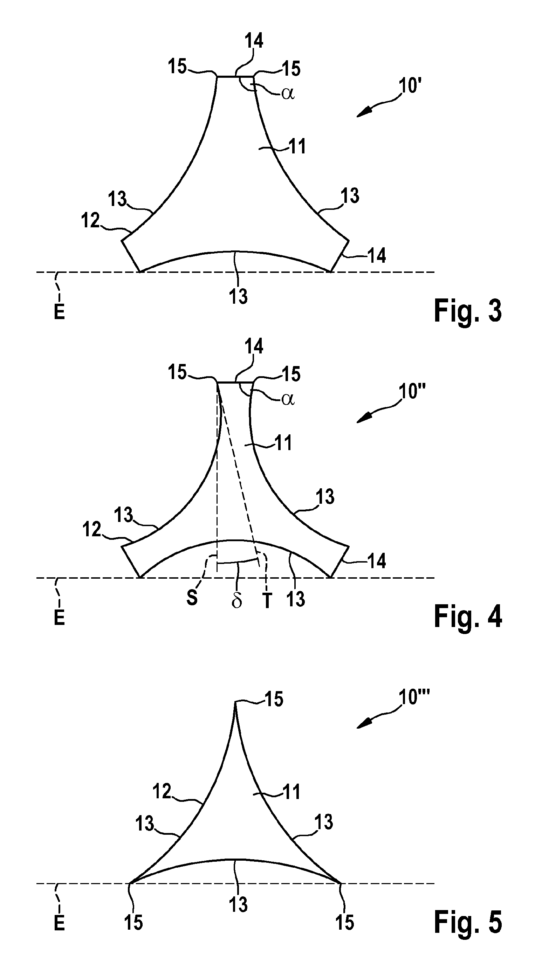

Figur 3 zeigt eine Draufsicht auf eine Basisfläche 11 eines weiteren erfindungsgemässen Schleifkorns 10'. Dessen Aussenkontur 12 enthält ebenfalls sechs Ecken 15 und drei geradlinige Abschnitte 14. Im Gegensatz zum Ausführungsbeispiel gemäss Figuren 2a und 2b weist die Aussenkontur 12 hier jedoch drei Abschnitte 13 auf, die strikt konkav gekrümmt sind. Zudem ist der Innenwinkel α an den Ecken 15 hier 90°. Hieraus folgt ein Eingriffswinkel von 0°, was zu einer nochmals verbesserten Schneidwirkung führt. Zudem verändert sich der Querschnitt des Schleifkorns 10' nur vergleichsweise geringfügig, wenn das Schleifkorn 10'

in Richtung von einem geradlinigen Abschnitt 14 zum Mittelpunkt des Schleifkorns 10' hin abgenutzt wird.

Bei dem in Figur 4 dargestellten dritten Ausführungsbeispiel eines erfindungsgemässen Schleifkorns 10" ist der Innenwinkel α sogar kleiner als 90°, was zu einem negativen Eingriffswinkel δ führt, da die oben beschriebene Senkrechte S hier ausserhalb des Schleifkorns verläuft.

Schliesslich zeigt Figur 5 ein viertes Ausführungsbeispiel eines erfindungsgemässen Schleifkorns 10"', dessen Aussenkontur 12 nur konkave Abschnitte 13 und Ecken enthält, jedoch keine geradlinigen Abschnitte.

Die erfindungsgemässen Schleifkörner können beispielsweise mit einem im Folgenden beschriebenen Verfahren hergestellt werden: Zunächst wird eine Dispersion aus 200 g α-Al2O3, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine wie unten näher beschriebene Giessform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Giessform entfernt wird. In einem abschliessenden Schritt wird das Vorprodukt als Schüttgut bei 1550°C für 5 Minuten gesintert. Der Dispergator wird beim Sintern herausgebrannt.

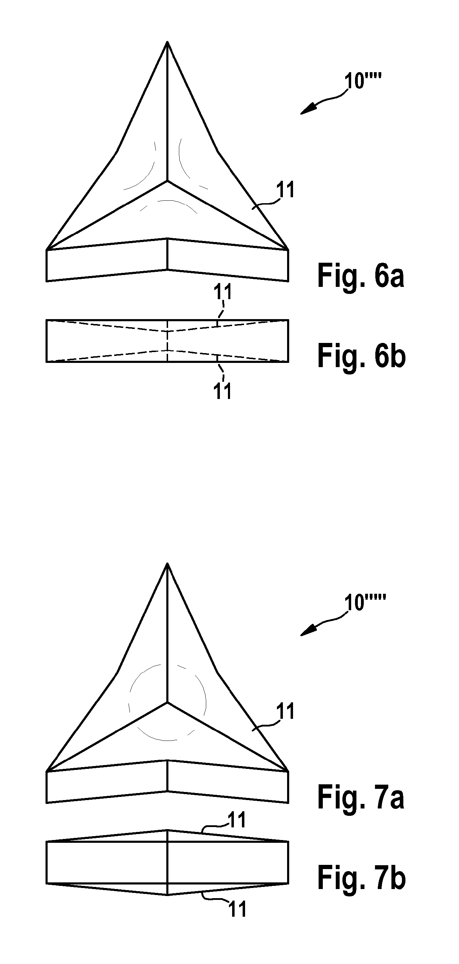

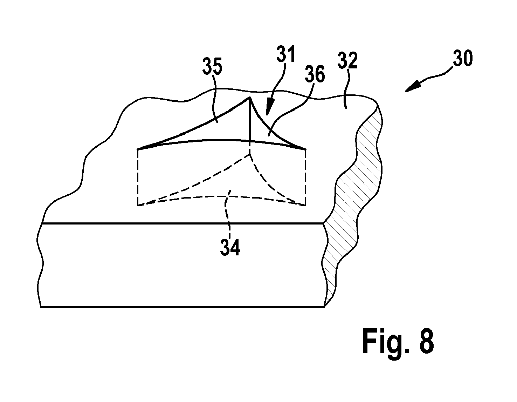

Die Figuren 7a und 7b zeigen zwei Ansichten einer fünften Ausführungsform. Dieses Schleifkorn 10"" weicht von der idealisierten Zylinderform ab, da die beiden Basisflächen 11 eine geringfügige konkave Wölbung aufweisen. Das in den Figuren 8a und 8b dargestellte Schleifkorn 10""' enthält zwei Basisflächen 11, die einen geringfügige konvexe Wölbung aufweisen. Derartige Abweichungen können beispielsweise durch die oben im Detail beschriebenen Herstellungstoleranzen entstehen.

In Figur 8 ist schematisch ein Teil einer Giessform 30 dargestellt, mit dem ein Schleifkorn 10'" gemäss Figur 5 hergestellt werden kann. Die Giessform 30 kann beispielsweise aus Silikon bestehen. Sie enthält eine Oberseite 32 und eine Vielzahl gleichartiger Vertiefungen 31, von denen hier zur Vereinfachung der Darstellung nur eine einzige dargestellt ist. Die Vertiefung 31 weist eine offene Deckfläche 35 auf, durch die eine wie oben beschriebene Dispersion eingefüllt werden kann. Die Oberfläche der Vertiefung 31 enthält eine Bodenfläche 34, die gleich der Form der Basisfläche 11 des Schleifkorns 10'" ist und parallel zur Oberseite 32 der Giessform 30 verläuft. Von der Bodenfläche 34 erstreckt sich eine aus mehreren Abschnitten bestehende Seitenwand 36, die komplementär zur Mantelfläche des Schleifkorns 10'" ist.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (10; 10'; 10"; 10"'; 10""; 10""') in Form eines insbesondere geraden Zylinders mit zwei gegenüberliegenden Basisflächen (11),
**dadurch gekennzeichnet, dass**
die Basisflächen (11) eine Aussenkontur (12) aufweisen, die mindestens einen konkaven Abschnitt (13) enthält.

2. Schleifkorn (10; 10'; 10"; 10"'; 10""; 10""') gemäss Anspruch 1,
**dadurch gekennzeichnet, dass**
die Aussenkontur (12) mindestens eine Ecke (15) aufweist.

3. Schleifkorn (10; 10'; 10"; 10"'; 10""; 10""') gemäss Anspruch 2,
**dadurch gekennzeichnet, dass**
die Aussenkontur (12) an der Ecke (15) einen Innenwinkel (α) der Basisfläche (11) definiert, der im Bereich von 65° bis 120°, bevorzugt von 65° bis 115', weiter bevorzugt von 75° bis 105°, besonders bevorzugt von 85° bis 95° liegt und ganz besonders bevorzugt 90° ist.

4. Schleifkorn (10; 10'; 10"; 10"'; 10""; 10""') gemäss einem der vorangehenden Ansprüche,
**dadurch gekennzeichnet, dass**
die Aussenkontur (12) zumindest einen geradlinigen Abschnitt (14) enthält.

5. Schleifkorn (10; 10'; 10"; 10"'; 10""; 10""') gemäss Anspruch 4,
**dadurch gekennzeichnet, dass**
mindestens ein geradliniger Abschnitt (14) unter einem Winkel zu einer Stützebene (E) des Schleifkorns (10; 10'; 10"; 10"'; 10""; 10""') verläuft, der höchstens 20°, bevorzugt höchstens 10°, besonders bevorzugt höchstens 5° beträgt.

6. Schleifkorn (10; 10'; 10"; 10"'; 10""; 10""') gemäss einem der vorangehenden Ansprüche,
**dadurch gekennzeichnet, dass**
eine Tangente (T) an zumindest einem Punkt der Aussenkontur (12) unter einem Winkel zu einer Senkrechten (S) verläuft, die senkrecht zur Stützebene (E) des Schleifkorns (10; 10'; 10"; 10"'; 10""; 10""') verläuft, wobei dieser Winkel im Bereich von -30° bis +30°, bevorzugt von -25° bis +25°, weiter bevorzugt von - 15° bis +15°, besonders bevorzugt von -5° bis +5° liegt und ganz besonders bevorzugt 0° ist.

7. Schleifkorn (10; 10'; 10"; 10"'; 10""; 10""') gemäss einem der vorangehenden Ansprüche,
**dadurch gekennzeichnet, dass**
die Aussenkontur (12) mindestens drei, bevorzugt genau drei, konkave Abschnitte (13) aufweist, deren Enden jeweils Ecken (15) der Aussenkontur (12) sind, und dass die Aussenkontur (12) zwischen zwei konkaven Abschnitten (13) jeweils einen geradlinigen Abschnitt (14) aufweist.

8. Schleifkorn (10; 10'; 10"; 10"'; 10""; 10""') gemäss einem der vorangehenden Ansprüche,
**dadurch gekennzeichnet, dass**
das Verhältnis aus der Höhe (h) des Schleifkorns (10; 10'; 10"; 10"'; 10""; 10""') und dem Durchmesser eines Hüllkreises der Basisflächen (11) höchstens 1, bevorzugt höchstens 0,8, besonders bevorzugt höchstens 0,6 ist.

9. Schleifkorn (10; 10'; 10"; 10"'; 10""; 10""') gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

10. Gesamtheit von Schleifkörnern (10; 10'; 10"; 10"'; 10""; 10""'), **dadurch gekennzeichnet, dass**
sie mindestens 20 Gew.-%, bevorzugt mindestens 50 Gew.-%, besonders bevorzugt mindestens 90 Gew.-% Schleifkörner (10; 10'; 10"; 10"'; 10""; 10""') nach einem der vorangehenden Ansprüche enthält.

11. Verfahren zum Herstellen mindestens eines Schleifkorns (10; 10'; 10"; 10"'; 10""; 10""') oder einer Gesamtheit von Schleifkörnern (10; 10'; 10"; 10"'; 10""; 10""') gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung (31) einer Giessform (30);
c) optional Abrakeln einer Oberseite (32) der Giessform (30), um zumindest einen Teil der Dispersion zu entfernen, der über die Oberseite (32) der Giessform (30) übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform (30);
f) optional Kalzinieren des Schleifkorn-Vorprodukts;
g) Sintern des Schleifkorn-Vorprodukts, um mindestens ein Schleifkorn (10; 10'; 10"; 10"'; 10""; 10""') zu erhalten.

12. Giessform (30) zum Herstellen mindestens eines Schleifkorns (10; 10'; 10"; 10"'; 10""; 10""') nach einem der Ansprüche 1 bis 9, wobei die Giessform (30) mindestens eine Vertiefung (31), bevorzugt eine Vielzahl von Vertiefungen (31), mit einer jeweiligen Oberfläche aufweist, wobei die Oberfläche komplementär zur Form zumindest eines Teils der Oberfläche des Schleifkorns (10; 10'; 10"; 10"'; 10""; 10""') ist.

13. Schleifartikel (40), enthaltend eine Gesamtheit von Schleifkörnern (10; 10'; 10"; 10"'; 10""; 10""') gemäss Anspruch 11.

14. Verfahren zum Herstellen eines Schleifartikels (40) gemäss Anspruch 13, enthaltend einen Schritt, in dem eine Gesamtheit von Schleifkörnern (10; 10'; 10"; 10"'; 10""; 10""') gemäss Anspruch 10 an und/oder in einem Substrat fixiert wird, insbesondere mittels eines Bindemittels (42).

15. Verfahren zum Schleifen einer Oberfläche, insbesondere einer lackierten Oberfläche, mit einem Schleifartikel (40) gemäss Anspruch 13.
